# EUROPÄISCHE PATENTANMELDUNG

(11) **EP 2 019 021 A1**
(43) Veröffentlichungstag der Anmeldung: **28.01.2009**
(21) Anmeldenummer: 08104834.0
(22) Anmeldetag: 23.07.2008
(51) Int. Cl.: B62D 5/04

(54) **Lenksystem, insbesondere für ein Kraftfahrzeug**

(30) Priorität: 25.07.2007 DE 102007034771
(71) Anmelder: ZF-Lenksysteme GmbH, 73527 Schwäbisch Gmünd (DE)
(72) Erfinder: Hauck, Michael, 73630, Remshalden (DE)

(57) **Zusammenfassung**

Ein Lenksystem umfasst eine Lenkwelle (2) und einen elektrischen Antriebsmotor (6) zur Lenkkraftunterstützung, wobei die Motorwelle über eine Zwischenwelle (4) mit der Lenkwelle gekoppelt ist. Ein auf der Motorwelle angeordnetes Motorritzel (8) ist mit einem ersten Zwischenrad (5) auf der Zwischenwelle und ein zweites Zwischenrad (12) mit einem Abtriebsrad (3) auf der Lenkwelle drehgekoppelt. Das Abtriebsrad und das zweite Zwischenrad liegen in einer den Antriebsmotors schneidenden Drehebene.

## Beschreibung

Die Erfindung bezieht sich auf ein Lenksystem, insbesondere für ein Kraftfahrzeug, nach dem Oberbegriff des Anspruches 1.

In der DE 10 2004 059 461 A1 wird ein zweistufiges, als Riemengetriebe ausgebildetes Lenksystem beschrieben, dessen Lenkwelle über eine Zwischenwelle von einem elektrischen Antriebsmotor unterstützt wird. Ein auf der Motorwelle aufsitzendes Motorritzel ist über einen ersten Übertragungsriemen mit einem ersten Zwischenrad auf der Zwischenwelle drehgekoppelt, wobei die Drehbewegung der Zwischenwelle über ein zweites Zwischenrad und einen weiteren Übertragungsriemen auf ein Abtriebsritzel übertragen wird, welches drehfest auf der Lenkwelle aufsitzt. Die Motorwelle, die Zwischenwelle und die Lenkwelle sind jeweils zueinander parallel angeordnet.

Diese Ausführung beansprucht in Achsrichtung einen verhältnismäßig großen Bauraum, da der elektrische Antriebsmotor, das Motorritzel mit dem ersten Zwischenrad und das Abtriebsrad mit dem zweiten Zwischenrad axial aufeinanderfolgend angeordnet sind.

Der Erfindung liegt die Aufgabe zugrunde, ein kompakt ausgebildetes, mindestens zweistufiges Lenksystem zu schaffen.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Lenksystem, welches insbesondere für den Einsatz in Kraftfahrzeugen vorgesehen ist, wird die Lenkwelle von einem elektrischen Antriebsmotor unterstützt, dessen Motorwelle über eine Zwischenwelle mit der Lenkwelle gekoppelt ist, wobei die Lenkwelle, die Motorwelle und die Zwischenwelle parallel zueinander liegen. Ein auf der Motorwelle angeordnetes Motorritzel ist mit einem ersten Zwischenrad auf der Zwischenwelle drehgekoppelt, auf der ein zweites Zwischenrad angeordnet ist, welches mit einem Abtriebsrad drehgekoppelt ist, das auf einem Wellenabschnitt der Lenkwelle angeordnet ist. Zur Realisierung einer in Achsrichtung kompakten Bauform liegen das Abtriebsrad und das zweite Zwischenrad in einer den Antriebsmotor, insbesondere den Stator des Antriebsmotors schneidenden Drehebene.

In dieser Ausführung liegen zumindest wesentliche Teile des Antriebsmotors, das Abtriebsrad sowie eines der Zwischenräder parallel zueinander, wodurch die axiale Bauraumverkürzung im Vergleich zu einer axial aufeinander folgenden Anordnung erzielt wird. Die Bauraumverkürzung wird ohne Funktionseinbuße erreicht. Unterstützt wird dies gemäß einer vorteilhaften Weiterbildung dadurch, dass das Motorritzel und das weitere Zwischenrad in einer gemeinsamen, parallelen zweiten Drehebene liegen, die eine Sensoreinrichtung schneidet, welche dem Lenksystem zugeordnet und über die insbesondere das aktuell wirkende Lenkmoment ermittelbar ist. Das Motorritzel und das dem Motorritzel zugeordnete Zwischenrad auf der Zwischenwelle befinden sich vorteilhaft auf der dem Lenkrad zugewandten Seite der Lenkwelle.

In dieser Ausführung liegen einerseits der Antriebsmotor, das Abtriebsrad und das dem Abtriebsrad zugeordnete Zwischenrad und andererseits das Motorritzel, das dem Motorritzel zugeordnete weitere Zwischenrad sowie die Sensoreinrichtung jeweils parallel zueinander. Jeweils zwei Komponenten aus unterschiedlichen Drehebenen befinden sich hierbei vorteilhaft auf einer gemeinsamen Welle: zum einen liegen das Abtriebsrad und die Sensoreinrichtung, über die das Lenkmoment zu ermitteln ist, auf der Lenkwelle bzw. einem mit der Lenkwelle drehfest gekoppelten Wellenabschnitt, zum andern weist die Zwischenwelle die beiden Zwischenräder mit gleicher Drehachse auf und schließlich befindet sich das Motorritzel außerhalb des Motorgehäuses bzw. des Stators auf der Motorwelle.

Zur Aufnahme der Komponenten des Lenksystems ist ein Lenkgehäuse vorgesehen, welches bevorzugt zweiteilig ausgebildet ist. Die Trennlinie zwischen dem Gehäuseunterteil und dem Gehäuseoberteil verläuft insbesondere im Bereich zwischen den beiden Getriebestufen, also zwischen Motorritzel bzw. erstem Zwischenrad einerseits und Abtriebsrad bzw. zweitem Zwischenrad andererseits. In dieser Ausführung ist jede Getriebestufe jeweils einem Gehäuseteil zugeordnet.

Des Weiteren kann es zweckmäßig sein, weitere Komponenten des Lenksystems in das Lenkgehäuse zu integrieren. So sind beispielhaft Lagerstellen im Lenkgehäuse für die Lenkwelle vorgesehen, außerdem kann eine Gehäusekomponente das Motorgehäuse des Antriebsmotors bzw. einen Teil davon bilden. Der Antriebsmotor ist in dieser Ausführung als Motorpatrone ohne oder lediglich mit minimal ausgebildetem Motorgehäuse ausgeführt, das in wesentlichen Teilen von dem Lenkgehäuse gebildet ist. Die Befestigung des Antriebsmotors in dem betreffenden Teil des Lenkgehäuses erfolgt beispielsweise durch Einpressen oder ggf. mithilfe eines federnden Elementes, insbesondere eines Federringes, wodurch eine federnde Aufhängung des Antriebsmotors realisiert werden kann.

Das Abtriebsrad, welches drehfest mit der Lenkwelle gekoppelt ist, ist gemäß einer weiteren vorteilhaften Ausführung hohlzylindrisch bzw. topfförmig ausgebildet und übergreift die im Lenkgehäuse vorgesehenen Lagerstellen für die Lenkwelle. Hierdurch kann eine weitere Bauraumreduzierung erreicht werden.

Die Lenkwelle, die Motorwelle und die Zwischenwelle, die jeweils parallel zueinander angeordnet sind, liegen gemäß einer ersten bevorzugten Ausführung in einer gemeinsamen Ebene, wodurch das Lenksystem quer zu dieser Ebene eine verhältnismäßig schmale Erstreckung aufweist. Gemäß alternativer Ausführung kann es aber auch zweckmäßig sein, dass die Wellen jeweils Eckpunkte eine Dreiecks bilden, wodurch eine kompaktere Ausbildung des Lenksystems erreicht wird.

Weitere Vorteile und zweckmäßige Ausführungen sind den weiteren Ansprüchen, der Figurenbeschreibung und den Ansprüchen zu entnehmen. Es zeigen:
- Fig. 1: eine Draufsicht auf ein Lenksystem für ein Kraftfahrzeug mit einer Lenkwelle, einer Motorwelle eines elektrischen Antriebsmotors und einer zwischengelagerten Zwischenwelle zur Übertragung der Drehbewegung der Motorwelle auf die Lenkwelle, wobei Lenkwelle, Zwischenwelle und Motorwelle in einer gemeinsamen Ebene liegen,
- Fig. 2: ein Lenksystem in alternativer Ausführung, bei dem die Lenkwelle, die Zwischenwelle und die Motorwelle jeweils Eckpunkte eines Dreiecks bilden,
- Fig. 3: eine Seitenansicht eines Lenksystems, bei dem das auf der Lenkwelle angeordnete Abtriebsrad von einem Zwischenrad auf der Zwischenwelle angetrieben wird und Abtriebsrad und Zwischenrad in einer gemeinsamen Drehebene mit dem Stator des Antriebsmotors liegen, wohingegen das Motorritzel mit einem weiteren Zwischenrad und einer Sensoreinrichtung in einer zweiten Drehebene liegt,
- Fig. 4: eine Ansicht gemäß Fig. 3, jedoch mit zwei zusätzlichen Übertragungsriemen zwischen dem Motorritzel des Antriebsmotors und einem ersten Zwischenrad auf der Zwischenwelle sowie zwischen dem zweiten Zwischenrad der Zwischenwelle und dem Abtriebsrad,
- Fig. 5: eine perspektivische Ansicht eines zweiteiligen Lenkgehäuses zur Aufnahme der Lenkkomponenten des Lenksystems,
- Fig. 6: einen Schnitt durch das Lenkgehäuse,
- Fig. 7: einen Schnitt durch das Lenkgehäuse im Bereich des Antriebsmotors.

In den Figuren sind gleiche Bauteile mit gleichen Bezugszeichen versehen.

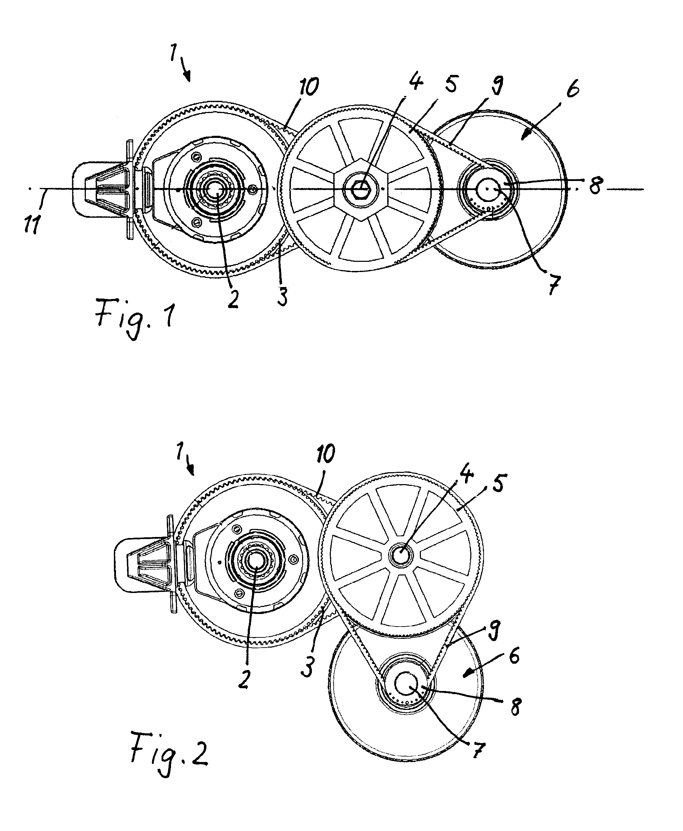

Das in Fig. 1 dargestellte Lenksystem 1 für ein Kraftfahrzeug ist als EPS (Electric Power Steering) ausgebildet, bei dem die Lenkunterstützung mithilfe eines elektrischen Antriebsmotors 6 erzeugt wird. Das Lenksystem 1 umfasst eine Lenkwelle 2, die über ein Lenkrad von dem Fahrer betätigt wird und über die die Lenkvorgabe des Fahrers über ein Lenkgestänge auf die lenkbaren Räder des Fahrzeuges übertragen wird. Die Lenkunterstützung vom Antriebsmotor 6 wird mithilfe einer Zwischenwelle 4 auf die Lenkwelle 2 übertragen, indem ein Motorritzel 8 auf einer Motorwelle 7 des elektrischen Antriebsmotors über einen ersten Übertragungsriemen 9 mit einem ersten Zwischenrad 5 auf der Zwischenwelle 4 kämmt und ein zweites, in Fig. 1 nicht dargestelltes Zwischenrad auf der Zwischenwelle 4 über einen zweiten Übertragungsriemen 10 mit einem Abtriebsrad 3 verbunden ist, welches drehfest auf der Lenkwelle 2 bzw. einem Wellenabschnitt der Lenkwelle 2 aufsitzt. Über die Größenverhältnisse von Motorritzel 8 zu erstem Zwischenrad 5 und zweitem Zwischenrad zu Abtriebsrad 3 wird das Übersetzungsverhältnis bestimmt, mit dem das elektrische Antriebsmoment des Antriebsmotors auf die Lenkwelle übertragen wird. In der Ausführung nach Fig. 1 liegen Lenkwelle 2, Zwischenwelle 4 und Motorwelle 8, die jeweils parallel zueinander angeordnet sind, in einer gemeinsamen Ebene 11.

Im Ausführungsbeispiel gemäß Fig. 2 weist das Lenksystem 1 den gleichen Grundaufbau wie im vorhergehenden Ausführungsbeispiel auf, jedoch mit dem Unterschied, dass die Lenkwelle 2, die Zwischenwelle 4 und die Motorwelle 7 nicht in einer gemeinsamen Ebene liegen, sondern vielmehr Eckpunkte eine Dreieckes bilden. In beiden Ausführungsbeispielen befindet sich jedoch die Zwischenwelle 4 zwischen der Lenkwelle 2 und der Motorwelle 7.

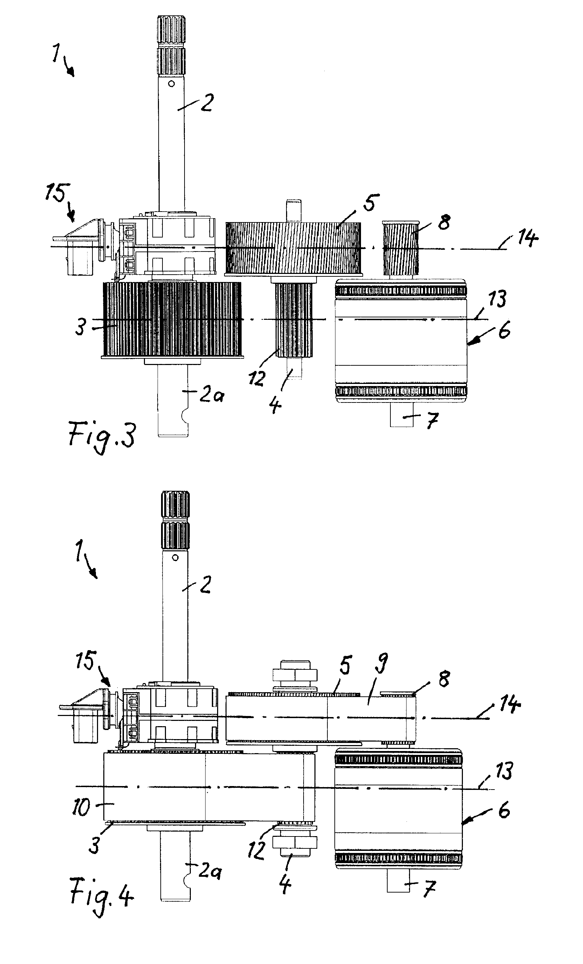

In Fig. 3 ist eine Seitenansicht auf das Lenksystem 1 ohne Übertragungsriemen und in Fig. 4 eine Seitenansicht einschließlich der Übertragungsriemen dargestellt. Zu erkennen ist die parallele Anordnung von Lenkwelle 2, Zwischenwelle 4 und Motorwelle 7. Der Lenkwelle 2 ist eine Sensoreinrichtung 15 zugeordnet, welche einen Sensor zur Detektierung des auf die Lenkwelle wirkenden Lenkmomentes umfasst. Das Abtriebsrad 3 sitzt auf einem Wellenabschnitt 2a der Lenkwelle 2 und liegt mit dem zweiten Zwischenrad 12 der Zwischenwelle 4 in einer gemeinsamen Drehebene 13. Der Antriebsmotor 6 ist in der Weise angeordnet, dass der Stator des Antriebsmotors und das Motorgehäuse von der Drehebene 13 geschnitten werden.

Das Motorritzel 8 und das erste Zwischenrad 5 auf der Zwischenwelle 4 liegen in einer zweiten Drehebene 14, die zur ersten Drehebene 13 parallel verläuft. Die Sensoreinrichtung 15 wird von dieser Drehebene 14 geschnitten. Motorritzel 8 und erstes Zwischenrad 5 liegen auf der dem Lenkrad zugewandten Seite, dementsprechend befinden sich das Abtriebsrad 3, das weitere Zwischenrad 12 sowie das Motorgehäuse und darin angeordneter Stator des Antriebsmotors auf der dem Lenkrad abgewandten Seite des Lenksystems.

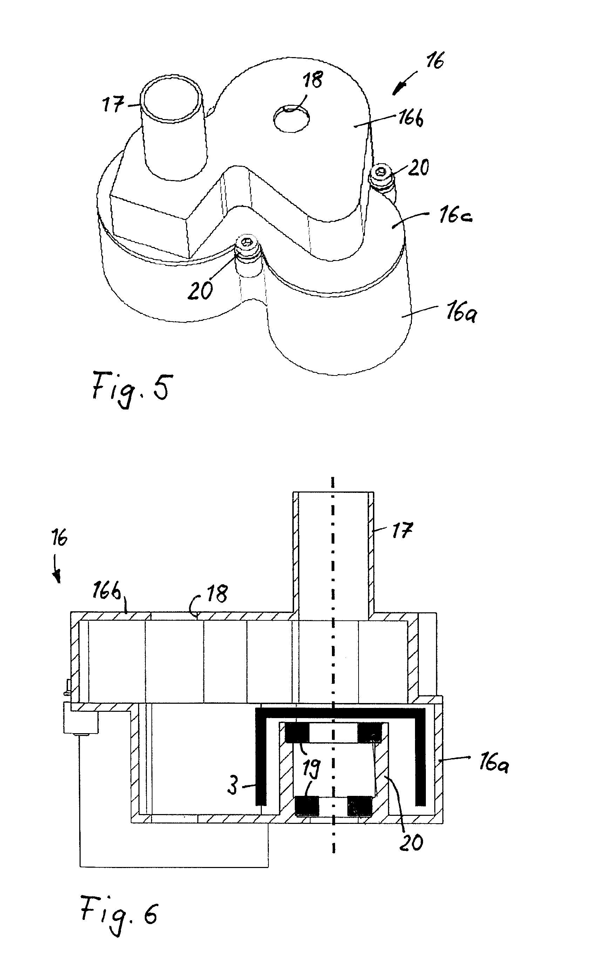

In den Figuren 5 und 6 ist das Lenkgehäuse 16 des Lenksystems dargestellt. Das Lenkgehäuse 16 ist zweiteilig aufgebaut und besteht aus einem Gehäuseunterteil 16a und einem darauf aufgesetzten, als Deckel fungierenden Gehäuseoberteil 16b, das, wie insbesondere Fig. 5 zu entnehmen, aus einem im Grundriss kleiner geformten Gehäuseteil und einer einteilig angeformten Deckelplatte 16c besteht, die mit dem Gehäuseunterteil 16a über Verbindungsstellen 20 zu verbinden ist. Das Gehäuseoberteil 16b ist mit einem offenen, axial verlaufenden Dom 17 versehen, welcher zur Aufnahme der Sensorik vorgesehen ist. Außerdem ist in das Gehäuseoberteil 16b eine Ausnehmung 18 eingebracht, über die beispielsweise Strom zuführende Kabel oder Signalleitungen geführt werden.

Beide Teile des Lenkgehäuse 16 bestehen z.B. aus Blech und werden beispielsweise im Stanz- oder Tiefziehverfahren hergestellt. Infrage kommt aber auch eine Herstellung im Leichtmetall-Druckgussverfahren oder eine Herstellung als Kunststoffteile, die mittels entsprechender Formgebungsverfahren produziert werden. Dies kann insbesondere bei hohen Anforderungen an die Akustik vorteilhaft sein. Gegebenenfalls können stabilisierende und/oder festigkeitssteigernde Elemente sowie kombinierte Bauteile und/oder Herstellungsverfahren zum Einsatz kommen.

Wie Fig. 6 zu entnehmen, sind in einem inneren Dom 20, welcher einteilig mit dem Gehäuseunterteil 20 ausgebildet ist und der koaxial zu dem Dom 17 im Gehäuseoberteil 16b verläuft, Lagerstellen 19 zur Lagerung der Lenkwelle angeordnet. Der innere Dom 21 einschließlich der Lagerstellen 19 wird von dem topfförmig ausgebildeten Abtriebsrad 3 übergriffen. Auf diese Weise kann eine sehr kompakte Ausführung realisiert werden.

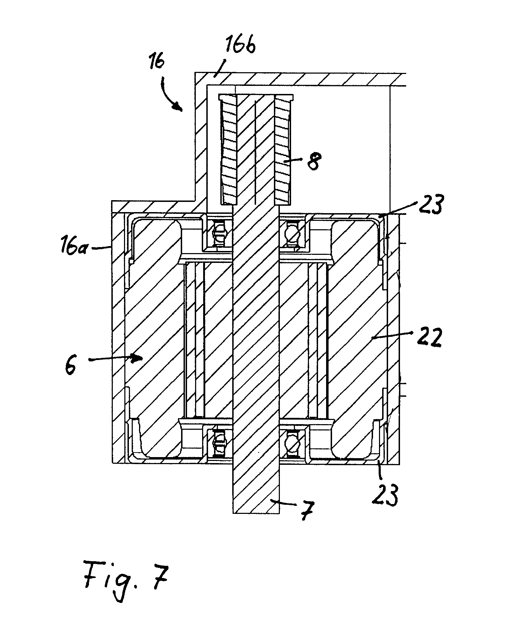

Wie Fig. 7 zu entnehmen, ist das Gehäuseunterteil 16a zur Aufnahme des elektrischen Antriebsmotors 6 ausgebildet. Dieser ist z.B. als Patronenlösung incl. Lagerung ausgebildet und über eingeformte und/oder zusätzliche Sicherungs- bzw. Befestigungselemente im Gehäuse befestigt. Alternativ kann Motor und dessen Lagerung jeweils in das Gehäuse eingepresst oder anderweitig eingebaut sein.

### Bezugszeichen

- 1: Lenkwelle
- 2: Lenkwelle
- 2a: Wellenabschnitt
- 3: Abtriebsrad
- 4: Zwischenwelle
- 5: erstes Zwischenrad
- 6: Antriebsmotor
- 7: Motorwelle
- 8: Motorritzel
- 9: Übertragungsriemen
- 10: Übertragungsriemen
- 11: Ebene
- 12: zweites Zwischenrad
- 13: erste Drehebene
- 14: zweite Drehebene
- 15: Sensoreinrichtung
- 16: Lenkgehäuse
- 16a: Gehäuseunterteil
- 16b: Gehäuseoberteil
- 16c: Deckelplatte
- 17: Dom
- 18: Ausnehmung
- 19: Lagerstelle
- 20: Verbindungsstelle
- 21: Dom
- 22: Stator
- 23: Federring

## Patentansprüche

1. Lenksystem, insbesondere für ein Kraftfahrzeug, mit einer Lenkwelle (2) und einem elektrischen Antriebsmotor (6) zur Lenkkraftunterstützung, dessen Motorwelle (7) über eine Zwischenwelle (4) mit der Lenkwelle (2) gekoppelt ist, wobei die Lenkwelle (2), die Motorwelle (7) und die Zwischenwelle (4) parallel zueinander angeordnet sind und ein auf der Motorwelle (7) angeordnetes Motorritzel (8) mit einem ersten Zwischenrad (5) auf der Zwischenwelle (4) und ein zweites Zwischenrad (12) auf der Zwischenwelle (4) mit einem Abtriebsrad (3) auf einem Wellenabschnitt (2a) der Lenkwelle (2) drehgekoppelt ist,
**dadurch gekennzeichnet,**
**dass** das Abtriebsrad (3) und das zweite Zwischenrad (12) in einer gemeinsamen, den Antriebsmotor (6) schneidenden Drehebene (13) liegen.

2. Lenksystem nach Anspruch 1,
**dadurch gekennzeichnet,**
**dass** das Motorritzel (8) und das erste Zwischenrad (5) in einer parallelen, zweiten Drehebene (14) liegen, die eine Sensoreinrichtung (15) des Lenksystems (1) schneidet.

3. Lenksystem nach Anspruch 2,
**dadurch gekennzeichnet,**
**dass** das Motorritzel (8) und das erste Zwischenrad (5) auf der dem Lenkrad zugewandten Seite der Lenkwelle (2) angeordnet sind.

4. Lenksystem nach Anspruch 2 oder 3,
**dadurch gekennzeichnet,**
**dass** die Sensoreinrichtung (15) auf der Lenkwelle (2) angeordnet ist.

5. Lenksystem nach einem der Ansprüche 1 bis 4,
**gekennzeichnet durch** ein zweiteiliges Lenkgehäuse (16) zur Aufnahme der Bauteile des Lenksystems (1).

6. Lenksystem nach Anspruch 5,
**dadurch gekennzeichnet,**
**dass** die Trennlinie zwischen dem Gehäuseunterteil (16a) und dem Gehäuseoberteil (16b) zwischen Motorritzel (8) bzw. erstem Zwischenrad (5) einerseits und Abtriebsrad (3) bzw. zweitem Zwischenrad (12) andererseits verläuft.

7. Lenksystem nach einem der Ansprüche 1 bis 6,
**dadurch gekennzeichnet,**
**dass** in das Lenkgehäuse (16) Lagerstellen (19) für die Lenkwelle (2) integriert sind.

8. Lenksystem nach Anspruch 7,
**dadurch gekennzeichnet,**
**dass** das Abtriebsrad (3) hohlzylindrisch ausgebildet ist und die Lagerstellen (19) für die Lenkwelle (2) übergreift.

9. Lenksystem nach einem der Ansprüche 1 bis 8,
**dadurch gekennzeichnet,**
**dass** ein Gehäuseteil (16a) des Lenkgehäuses (16) zugleich das Motorgehäuse für den Antriebsmotor (6) bildet.

10. Lenksystem nach einem der Ansprüche 1 bis 9,
**dadurch gekennzeichnet,**
**dass** der Antriebsmotor (6) in ein Gehäuseteil (16a) des Lenkgehäuses (16) eingepresst ist.

11. Lenksystem nach einem der Ansprüche 1 bis 10,
**dadurch gekennzeichnet,**
**dass** der Antriebsmotor (6) mittels eines Federelements (23) in einem Gehäuseteil (16a) des Lenkgehäuses (16) federnd gehalten ist.

12. Lenksystem nach einem der Ansprüche 1 bis 11,
**dadurch gekennzeichnet,**
**dass** die Lenkwelle (2), die Motorwelle (7) und die Zwischenwelle (4) in einer gemeinsamen Ebene (11) liegen.

13. Lenksystem nach einem der Ansprüche 1 bis 11,
**dadurch gekennzeichnet,**
**dass** die Lenkwelle (2), die Motorwelle (7) und die Zwischenwelle (4) Eckpunkte eines Dreieckes bilden.

14. Lenksystem nach einem der Ansprüche 1 bis 13,
**dadurch gekennzeichnet,**
**dass** Übertragungsriemen (9, 10) zur Übertragung der Drehbewegung vorgesehen sind.
